Europäisches Patentamt

European Patent Office

Office européen des brevets

Veröffentlichungsnummer: **0 309 612**

A1

## EUROPÄISCHE PATENTANMELDUNG

Anmeldenummer: 87114418.4

Int. Cl.⁴: **C12G 1/08 , B64D 1/04**

Anmeldetag: 02.10.87

Veröffentlichungstag der Anmeldung:
**05.04.89** Patentblatt **89/14**

Benannte Vertragsstaaten:
**DE ES FR IT**

Amelder: **Sektkellerei Schloss Wachenheim AG Kommerzienrat-Wagner-Strasse D-6706 Wachenheim(DE)**

Erfinder: **Heim, Alois Otto-Stang-Strasse 17 D-6701 Forst(DE)**
Erfinder: **Transier, Gert Scharnhorst-Strasse 12 D-6800 Mannheim 51(DE)**

Vertreter: **Wuesthoff, Franz, Dr.-Ing. et al Patentanwälte Wuesthoff -v. Pechmann-Behrens-Goetz Schweigerstrasse ·2 D-8000 München 90(DE)**

---

### Vorrichtung zum Entleeren von Flaschen.

Eine Vorrichtung zum Entleeren von Sektflaschen weist ein kurzes Stechrohr 26 auf, mit dem ein Flaschen-Kronenkorken durchstochen wird. Eine Steigleitung 32 ist durch das Stechrohr und den durchstochenen Kronenkorken in die Flasche einschiebbar. Unter Druck stehendes Gas wird durch das Stechrohr in die Flasche eingeleitet und drückt den Sekt durch die Steigleitung aus der Flasche.

Fig 1

EP 0 309 612 A1

## Vorrichtung zum Entleeren von Flaschen

Die Erfindung betrifft eine Vorrichtung zum Entleeren von Flaschen, insbesondere Sektflaschen, die durch einen Verschluß, wie insbesondere einen Kronenkorken, verschlossen sind.

Bei der Sektherstellung nach dem Flaschengärverfahren muß die beim Gären anfallende, sich in der Flasche absetzende Hefe vom Sekt getrennt werden.

Bei einer herkömmlichen Methode zum Entfernen der Hefe werden die Sektflaschen während des Gärvorganges mit dem Kopf nach unten gelagert und die sich bildende Hefe wird durch wiederholtes Drehen und Rütteln der Flaschen im Flaschenhals gesammelt. Zum Entfernen der Hefe wird der Flaschenhals der auf dem Kopf stehenden, üblicherweise durch einen Kronenkorken verschlossenen Flasche in ein Kältesolebad eingetaucht und auf ca. -25° C gekühlt. Dadurch wird der die Hefe enthaltende Inhalt des Flaschenhalses gefroren und kann anschließend nach Entfernen des Kronenkorkens, als Pfropfen aus der Flasche entnommen werden. Beim Entfernen des Pfropfens nach Öffnen der Flasche geht allerdings überschäumender Sekt verloren.

Dieses bekannte Verfahren zum Entfernen der Hefe aus dem Sekt ist aufwendig und teuer.

Ein anderes Verfahren ist aus der DE-OS 15 17 870 bekannt. Bei dieser sogenannten Warm-Degorgierung wird der Gärflascheninhalt in einen Absetz-Drucktank entleert, in welchem sich die im Sekt enthaltene Hefe absetzt, so daß der geklärte Sekt über Filter abgezogen werden kann. Der von der Hefe befreite Sekt kann dann in die Flaschen zurückgefüllt werden.

Beim Entfernen der Hefe soll der Sekt unter Druck eines Schutzgases, wie $CO_2$ gehalten werden, um Kontakt zwischen dem Sauerstoff der Luft und der Oberfläche des Sektes zu vermeiden, wodurch der Geschmack des Sektes beeinträchtigt würde. Das Schutzgas steht üblicherweise unter einem Druck von 5 bis 6 bar.

Bei der aus der DE-OS 15 17 870 bekannten Vorrichtung zum Warm-Degorgieren von Gärflaschen wird der Flaschenverschluß bei aufrecht stehender Flasche mittels einer Durchstechnadel durchstochen. Die Durchstechnadel weist über ihre gesamte Länge eine axiale Bohrung auf, die als Steigleitung für den aus der Flasche zu entfernenden Sekt dient. Nach dem Durchstoßen des Flaschenverschlusses wird die Durchstechnadel bis auf den Boden der Flasche abgesenkt und unter Druck stehendes Gas durch den abgedichteten Flaschenverschluß in die Flasche geführt, so daß der Flascheninhalt über den in der Durchstechnadel vorgesehenen Kanal in den oben beschriebenen Absetz-Drucktank entleert werden kann, in dem die Hefe in der beschriebenen Weise vom Sekt getrennt wird.

Die bekannte Vorrichtung weist jedoch einige Nachteile auf. Die Durchstechnadel muß eine Länge aufweisen, die etwa der Flaschenhöhe entspricht. Die Nadel wird beim Durchstechen des Kronenkorkens mit einer erheblichen Kraft beaufschlagt und neigt wegen ihrer großen Länge zum Ausknicken. Es ist deshalb eine aufwendige Abstützung der Nadel erforderlich. Auch die Herstellung der bekannten Durchstechnadel ist sehr aufwendig, insbesondere durch die über die gesamte Länge der Nadel gehende Axialbohrung.

Bei der bekannten Vorrichtung ist es überdies nicht möglich, die Flasche vollkommen zu entleeren, da eine Sektflasche wegen des hohen Innendrucks üblicherweise einen nach innen gewölbten Boden aufweist und die Durchstechnadel zentrisch in die Flasche eintaucht. Die zentrisch geführte Durchstechnadel dringt also nur bis zur höchsten Erhebung des Flaschenbodens und kann somit den darunter befindlichen Sekt nicht entfernen.

Der Erfindung liegt die Aufgabe zugrunde, die vorstehend beschriebene Vorrichtung zum Entleeren von Flaschen derart weiterzubilden, daß bei einfachem Aufbau eine vollständige Entleerung der Flaschen ermöglicht ist.

Erfindungsgemäß wird diese Aufgabe bei einer Vorrichtung zum Entleeren von Flaschen, insbesondere Sektflaschen, die durch einen Verschluß, wie einen Kronenkorken, verschlossen sind, mit einem durch den Verschluß durchstechbaren Stechrohr, einer in die Flasche einführbaren Steigleitung und mit Mitteln zum Zuführen von unter Druck stehendem Gas durch den vom Stechrohr durchstochenen Verschluß in die Flasche, dadurch gelöst, daß die Steigleitung im Stechrohr längsverschiebbar angeordnet ist.

Gemäß der Erfindung ist also keine sich über die gesamte Höhe der Flasche erstreckende Durchstechnadel mit einer Axialbohrung erforderlich, vielmehr wird die Funktion der bekannten Durchstechnadel durch zwei Bauteile ausgeführt, nämlich zum einen ein relativ kurzes Stechrohr, welches den Flaschenverschluß (Kronenkorken) durchsticht, und zum anderen eine im Stechrohr axial verschiebbare Steigleitung, die durch das Stechrohr hindurch zum Flaschenboden schiebbar ist.

Bei der erfindungsgemäß vorgesehenen Trennung von Stechrohr und Steigleitung muß nur das Stechrohr stabil ausgebildet sein, während die Steigleitung keine Kräfte aufzunehmen braucht. Die Steigleitung kann so ausgebildet werden, daß sie beim Durchschieben durch das Stechrohr in die Flasche nicht zentrisch auf die höchste Erhebung des Flaschenbodens auftrifft, sondern seitlich bis zum tiefsten Punkt der aufrecht stehenden Flasche gelangt. Hierzu kann die Steigleitung in geeigneter Weise verformbar, z.B. elastisch ausgebildet sein. Es ist auch möglich, die Steigleitung leicht schräg zur Flaschenachse zu stellen.

In einer bevorzugten Ausgestaltung der erfindungsgemäßen Vorrichtung ist zum Zuführen von unter Druck stehendem Gas in die Flasche zwischen der Außenwand der Steigleitung und der Innenwand des Stechrohres ein ringförmiger Spalt vorgesehen, durch den bei vom Stechrohr durchstoßenen Verschluß das Druckgas in die Flasche dringen kann. Die Druckgas-Zufuhr in die Flasche wird dabei über ein Ventil gesteuert. Daneben kann der erfindungsgemäß vorgesehene ringförmige Spalt auch zum Entfernen des Druckgases aus der Flasche dienen. Hierzu ist der ringförmige Spalt über ein weiteres Ventil an eine Evakuierungseinrichtung anschließbar.

Bei einer derart gestalteten Vorrichtung geht das Druckgas nicht verloren und kann für mehrere Arbeitsgänge wiederverwendet werden.

Ein besonders einfacher und kompakter Aufbau der erfindungsgemäßen Vorrichtung ergibt sich dann, wenn das Stechrohr in einer axial auf den Verschluß der Flasche aufsetzbaren Zentrierglocke angeordnet ist, in der eine Dichtung und die Spitze des Stechrohres in Bezug zueinander bewegbar sind, wobei die Dichtung mit einer radial ausgerichteten Dichtlippe in gasdichtem Eingriff mit dem Stechrohr und mit einer im wesentlichen axial ausgerichteten Dichtfläche in gasdichtem Eingriff mit dem Verschluß steht.

Bei einer derart gestalteten Vorrichtung wird beim Einstechen des Stechrohres in den Verschluß die Dichtung nur eine kurze Wegstrecke relativ zum das Stechrohr bewegt, so daß der Dichtungsverschleiß gering gehalten ist. Auch ermöglicht ein solcher Aufbau der Vorrichtung einen einfachen Austausch der Einzelteile, insbesondere der Verschleißteile.

Nachfolgend wird ein Ausführungsbeispiel der Erfindung anhand der Zeichnung näher erläutert. Es zeigt:

Fig. 1 einen Axialschnitt durch die wesentlichen Teile einer Vorrichtung zum Entleeren von Flaschen, und

Fig. 2 bis 7 die in Fig. 1 gezeigte Vorrichtung in verschiedenen Zuständen eines Flaschen-Entleerungszyklus.

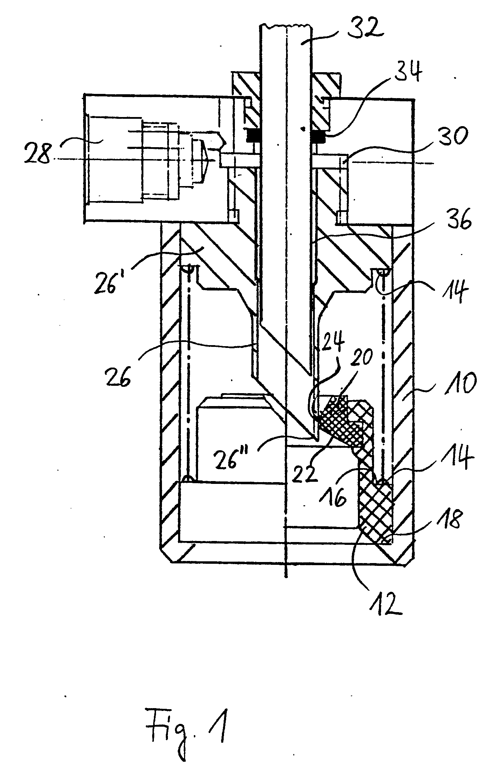

Gemäß Fig. 1 ist in einer Zentrierglocke 10 ein Abdicht- und Zentrierstück 12 abgestützt. Eine Wendelfeder 14 liegt an einem Anschlag 16 des Abdicht- und Zentrierstückes 12 und drückt dieses gegen einen Anschlag 18 der Zentrierglocke 10.

Eine Dichtung 20 aus elastischem Material ist im Abdicht- und Zentrierstück 12 formschlüssig befestigt. Die aus dem Abdicht- und Zentrierstück 12 und der Dichtung 20 gebildete Einheit ist gegen die Kraft der Wendelfeder 14 aus der in Fig. 1 gezeigten Stellung nach oben verschiebbar.

Die Dichtung 20 weist eine schräg nach unten geneigte Dichtfläche 22 und eine radial nach innen gerichtete Dichtlippe 24 auf. Wie weiter unten noch ausgeführt wird, kommt beim Entleeren einer Flasche die nach unten gerichtete Dichtfläche 22 mit dem Flaschenverschluß (z.B. ein Kronenkorken) in abdichtenden Eingriff, wobei die nach innen gerichtete Dichtlippe 24 mit einem Stechrohr 26 (Fig. 1) in abdichtendem Eingriff steht. Das Stechrohr 26 weist zum Durchstechen des Flaschenverschlusses eine durch Schrägschnitt gebildete Spitze 26″ auf und ist an einem Stechrohrträger 26′ befestigt.

Gemäß Fig. 1 sind die Zentrierglocke 10, das Abdicht- und Zentrierstück 12 und das Stechrohr 26 koaxial angeordnet.

Im oberen Abschnitt der Zentrierglocke 10 sind zwei Anschlüsse 28, 30 für unter Druck stehendes Gas bzw. zum Entfernen von Gas vorgesehen, deren Funktion weiter unten beschrieben wird.

Ein Entleerungsrohr 32 ist im Stechrohr 26 längsverschiebbar angeordnet. Mittels einer Dichtung 34 ist die Außenfläche des Entleerungsrohres 32 abgedichtet.

Zwischen der Außenfläche des Entleerungsrohrs 32 und dem Stechrohrträger 26′ ist ein ringförmiger Spalt 36 ausgebildet, der in leitender Verbindung mit den Anschlüssen 28 und 30 steht. Über die Anschlüsse 28 und 30 kann also wahlweise ein Gas in den Ringkanal 36 einströmen oder aus ihm entnommen werden. Der Ringkanal 36 steht ebenfalls in leitender Verbindung mit dem Inneren des Stechrohres 26 im Bereich von dessen Spitze 26″.

Gemäß den Fig. 2 bis 7 ist der nach oben aus der Zentrierglocke herausragende Abschnitt des Entleerungsrohres 32 in einer Führung 40 abgestützt. Durch ein Rückschlagventil 38 ist gewährleistet, daß eine Flüssigkeit das Entleerungsrohr nur in einer Richtung (in den Fig. nach oben) durchströmen kann.

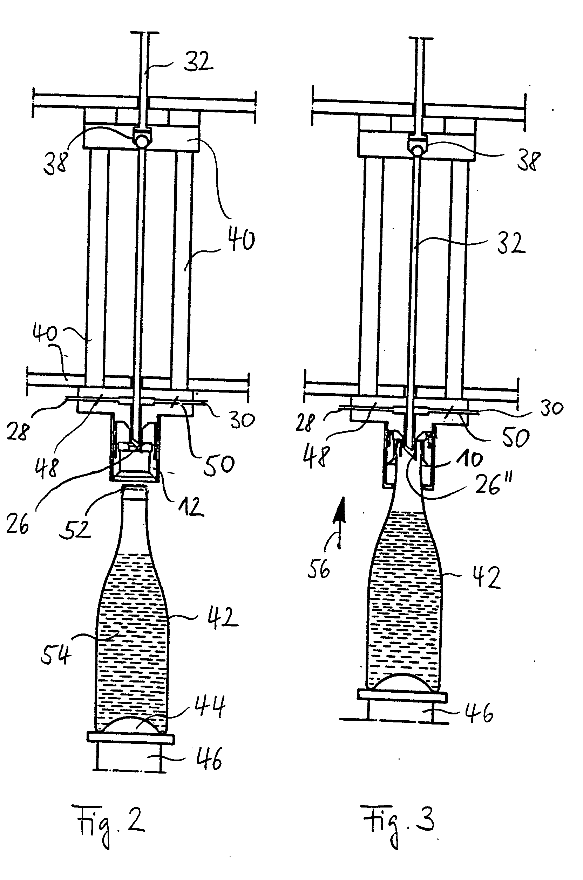

Gemäß den Fig. 2 bis 7 wird eine zu entleerende Flasche 42, deren Boden mit den Bezugszeichen 44 versehen ist, auf einem Hubzylinder 46 positioniert. Der Hubzylinder 46 ist in Richtung der Pfeile 56 (Fig. 3) und 56′ (Fig. 7) bewegbar, wobei die Zentrierglocke 10 und die von ihr aufgenommenen Bauteile ortsfest bleiben.

An den Anschlüssen 28 und 30 sind Ventile vorgesehen, welche durch die Bezugszeichen 48 bzw. 50 angedeutet sind.

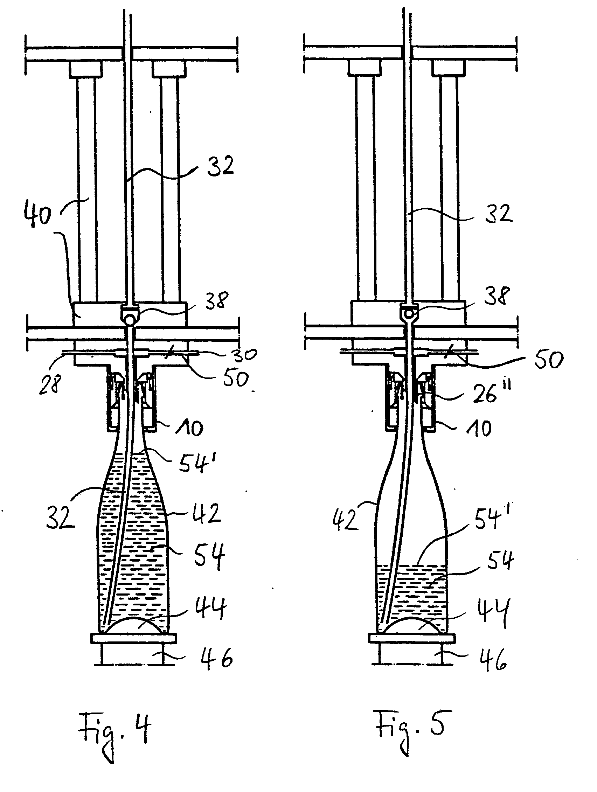

Die zu entleerende Flasche 42 ist von einem Kronenkorkenverschluß 52 verschlossen. In der Flasche 42 befindet sich der zu entleerende Sekt 54, dessen Spiegel mit den Bezugszeichen 54' (Fig. 4, 5) angedeutet ist.

Die Arbeitsweise der zuvor beschriebenen Vorrichtung ist wie folgt.

Die zu entleerenden Flaschen 42 kommen über eine nicht gezeigte Einteilschnecke und einen Einteilstern in die in Fig. 2 gezeite Stellung. Hierbei ist das Ventil 48 des Anschlusses 28 gesperrt. Druckseitig des Ventiles 48 ist eine $CO_2$-Quelle angeschlossen, deren Druck etwa 0,5 bis 1 bar über dem Innendruck der zu entleerenden Flasche 42 liegt. Das Ventil 50 des Anschlusses 30 ist in dieser Stellung ebenfalls gesperrt. Der Anschluß 30 führt zu einer Pumpe, mit der $CO_2$ abpumpbar ist.

Das Entleerungsrohr 32 führt zu einem Sammeltank (nicht gezeigt).

Aus der in Fig. 2 gezeigten Stellung wird der Hubzylinder 46 mit der Flasche 42 in Richtung des Pfeiles 56 in die in Fig. 3 gezeigte Stellung angehoben. Dabei wird der Flaschenhals in der Zentrierglocke 10 koaxial aufgenommen und die Dichtfläche 22 (Fig. 1) der Dichtung 20 setzt sich abdichtend auf den Kronenkorken 52. Bei weiterem Anheben der Flasche 42 mittels des Hubzylinders 46 durchstößt das Stechrohr 26 mit seiner Spitze 26'' den Kronenkorken 52. Dabei wird die aus dem Abdicht- und Zentrierstück 12 und der Dichtung 20 bestehende Einheit in Bezug auf das Stechrohr 26 gegen die Kraft der Wendelfeder 14 nach oben gedrückt.

Nachdem das Stechrohr 26 den Kronenkorken 52 durchstochen hat, wird das Entleerungsrohr 32 durch das Stechrohr 26 nach unten in die Flasche 42 geschoben. Das Entleerungsrohr 32 ist derart elastisch ausgebildet und seine Länge ist so bemessen, daß es am gewölbten Boden 44 der Flasche 42 nach außen abgleitet und bis zum tiefsten Punkt der Flasche 42 gelangt. Gleichzeitig wird das Ventil 48 des Anschlusses 28 geöffnet und unter Druck stehendes Kohlendioxid strömt über den ringförmigen Spalt 36 in die Flasche 42. Durch das unter Druck stehende Gas wird die Flüssigkeit gemäß Fig. 5 aus der Flasche 42 nach oben in das Entleerungsrohr 32 gedrückt, durch welches es bei geöffnetem Rückschlagventil 38 in Richtung des Sammeltanks (nicht gezeigt) strömt.

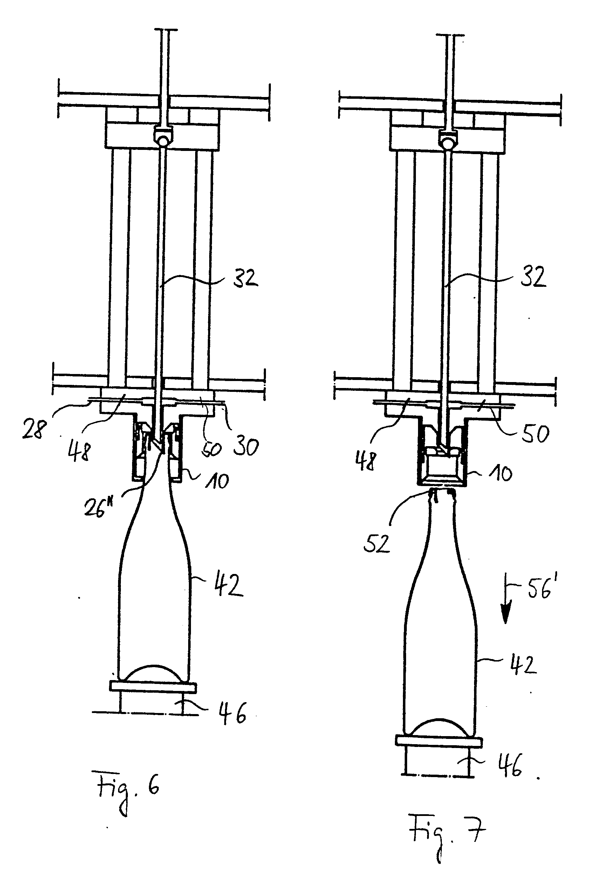

Nach der vollständigen Entleerung der Flasche wird das Ventil 48 des Anschlusses 28 geschlossen und das Ventil 50 des Anschlusses 30 geöffnet, so daß das Kohlendioxid aus der Flasche 42 in der in Fig. 6 gezeigten Stellung entfernt wird.

Nach der Evakuierung der Flasche werden die Ventile 48, 50 geschlossen und die entleerte Flasche 42 kann nach Absenken des Hubzylinders 46 (Fig. 7) weitertransportiert werden.

**Ansprüche**

1. Vorrichtung zum Entleeren von Flaschen (42), insbesondere Sektflaschen, die durch einen Verschluß (52), wie insbesondere einen Kronenkorken, verschlossen sind, mit einem durch den Verschluß durchstechbaren Stechrohr (26), einer in die Flasche (42) einführbaren Steigleitung (32) und mit Mitteln (28, 30, 48, 50) zum Zuführen von unter Druck stehendem Gas, wie Kohlendioxid, durch den vom Stechrohr (26) durchstochenen Verschluß (52) in die Flasche (42),
dadurch **gekennzeichnet,**
daß die Steigleitung (32) im Stechrohr (26) längsverschiebbar angeordnet ist.

2. Vorrichtung nach Anspruch 1,
dadurch **gekennzeichnet,**
daß die Steigleitung (32) zumindest teilweise verformbar ausgebildet ist.

3. Vorrichtung nach einem der Ansprüche 1 oder 2,
dadurch **gekennzeichnet,**
daß zwischen der Außenwand der Steigleitung (32) und der Innenwand des Stechrohres (26) ein ringförmiger Spalt (36) vorgesehen ist, durch den das unter Druck stehende Gas in die Flasche (42) strömt.

4. Vorrichtung nach einem der vorhergehenden Ansprüche,
dadurch **gekennzeichnet,**
daß das Stechrohr (26) in einer axial auf den Verschluß (52) der Flasche (42) aufsetzbaren Zentrierglocke (10) angeordnet ist, in der eine Dichtung (20) und die Spitze (26'') des Stechrohres in Bezug zueinander bewegbar sind, wobei die Dichtung (20) mit einer radial ausgerichteten Dichtlippe (24) in gasdichten Eingriff mit dem Stechrohr (26) und mit einer im wesentlichen axial ausgerichteten Dichtfläche (22) in gasdichten Eingriff mit dem Verschluß (52) bringbar ist.

Fig. 1

Fig. 2

Fig. 3

Fig. 4

Fig. 5

Fig. 6

Fig. 7

# EUROPÄISCHER RECHERCHENBERICHT

Nummer der Anmeldung

EP 87 11 4418

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 040 664 (C.O. MARX) * Figuren; Ansprüche; Seite 1, Spalte 2, Zeile 48 - Seite 2, Spalte 1, Zeile 48 * | 1,3 | C 12 G 1/08 B 67 D 1/04 |
| X | DE-C- 390 369 (A. FRANZ JUNG) * Figuren; Ansprüche * | 1 | |
| X | FR-A- 325 051 (M. DURAFORT) * Figuren; Zusammenfassung * | 1,3 | |
| A | GB-A-2 089 322 (ARTHUR GUINNESS SON & CO.) * Figuren; Seite 4, Zeilen 111-124 * | 2 | |
| A | FR-A-1 536 352 (J. CARLE) * Figuren; Ansprüche * | 1,2 | |
| A | US-A-2 106 192 (W.C. SAVILLE) * Figuren * | 4 | |
| A | WO-A-8 301 669 (J. RILETT) | | |

| | | | RECHERCHIERTE SACHGEBIETE (Int. Cl.4) |
|---|---|---|---|
| | | | C 12 G B 67 D A 61 M |

Der vorliegende Recherchenbericht wurde für alle Patentansprüche erstellt

| Recherchenort | Abschlußdatum der Recherche | Prüfer |
|---|---|---|
| DEN HAAG | 28-06-1988 | COUCKE A.O.M. |